# EUROPEAN PATENT APPLICATION

(11) **EP 4 769 264 A1**
(43) Date of publication of application: **01.07.2026**
(21) Application number: 25213835.9
(22) Date of filing: 06.11.2025
(51) Int. Cl.: G06Q 10/0633, G06Q 10/10

(54) **METHOD AND SYSTEM FOR DIGITAL TRANSFORMATION AND INTEGRATION**

(30) Priority: 26.12.2024 US 202419001836
(71) Applicant: Accenture Global Solutions Limited, Dublin 4 (IE)
(72) Inventor: VIJAYARAGHAVAN, Koushik, Chennai (IN); NAGARAJAN, Rajesh, Chennai (IN); PATRA, Eishvinder, Bengaluru (IN); YENDIGERI, Deepa, Pune (IN); DAYAL, Sumit, Bangalore (IN); SRIDEVI, Jayashri, Chennai (IN); GHORAKAVI, Prakash, Bengaluru (IN); SHUKLA, Rekha, Noida (IN); VINOD SANE, Suhas, Thane (IN); SHETTY, Nidhi Ashok, Bangalore (IN); VOHRA, Anil, Gurgaon (IN); LAKSHMINARASIMHAN MAGGE, Geetha, Bangalore (IN); NAYAR, Priyadarshini Jyotheendar, Trivandrum (IN); JINDAL, Manas, Bengaluru (IN); BONTHA, Pratap Venkata Naga Poorna, Hyderabad (IN)
(74) Representative: Müller-Boré & Partner Patentanwälte PartG mbB

(57) **Abstract**

The present disclosure discloses methods and systems for digital transformation and integration. The method includes receiving a collection of documents related to operations of an entity. Thereafter, a business process hierarchy based on the collection of documents is generated, using a model and a graph database of accumulated documents. The nodes of the business process hierarchy are divided into different levels of logical groups and includes a plurality of nodes of each level of at least four levels. Further, the business process hierarchy is displayed in a user interface. The user interface allows user to input to modify the business process hierarchy to modify or add at least one node of the business process hierarchy. Furthermore, a plurality of documents is generated, corresponding to different document types for implementing each node of the business process hierarchy, wherein the plurality of documents includes different modalities.

## Description

### TECHNICAL FIELD

Various embodiments described herein relate generally to digital transformation and integration. Specifically, a method and system for digital transformation and integration across technology delivery lifecycle (TDLC).

### BACKGROUND

In today's digital age, technologies like artificial intelligence (AI), machine learning, the Internet of Things (IoT), advanced analytics, and robotics are essential for businesses to thrive in the competitive landscape. These innovations are revolutionizing the way companies interact with their clients/customers. As a result, digital transformation has become a critical component for the companies to optimize operations and maintain a competitive edge. By leveraging advanced technologies, companies can enhance operational efficiency, respond to rapidly changing market dynamics, and create more customer-centric experiences. A strategic approach to achieving these goals is through enterprise resource planning (ERP) transformation.

An ERP transformation entails a migration process that converts a company's legacy data into a compatible format for a new ERP platform. This often involves migrating from outdated onpremise solutions like SAP ECC to advanced, cloud-native platforms such as SAP S/4HANA. This migration must align with existing organizational standards to guarantee data quality, accessibility, and usability. This transition is crucial to mitigate security risks associated with aging software and to unlock the full potential of digital transformation

However, the process of migrating and integrating complex ERP systems can be time-consuming and error prone. Traditional methods of manual code development and configuration are often inefficient and lack scalability.

To address these challenges, the integration of generative artificial intelligence (GenAI) into ERP transformation offers a transformative solution. By automating routine tasks, generating intelligent code, and accelerating the overall process, GenAI empowers organizations to streamline their operations and drive innovation.

### SUMMARY

Implementations of the present disclosure are generally directed to digital transformation and integration. More particularly, implementations of the present disclosure are directed to methods and systems for digital transformation and integration across technology delivery lifecycle (TDLC) using generative artificial intelligence (Gen AI) techniques.

In general, innovative aspects of the subject matter described in herein provide a method and a system for digital transformation and integration. The method may include receiving a collection of documents related to operations of an entity. Further, the method may include generating, using a model and a graph database of accumulated documents, a business process hierarchy based on the collection of documents. Herein, the nodes of the business process hierarchy may be divided into different levels of logical groups and include a plurality of nodes of each level of at least four levels. Thereafter, the method may include displaying the business process hierarchy in a user interface. Herein the user interface may allow input to supplement the business process hierarchy. Moreover, the method may include receiving user input modifying the business process hierarchy to modify or add at least one node of the business process hierarchy and generating a plurality of documents corresponding to different document types for implementing each node of the business process hierarchy. Herein, the plurality of documents may include different modalities.

The present disclosure further describes a system for implementing the method provided herein.

It is appreciated that methods in accordance with the present disclosure can include any combination of the aspects and features described herein. That is, the method in accordance with the present disclosure is not limited to the combinations of aspects and features specifically described herein, but also includes any combination of the aspects and features provided.

The details of one or more implementations of the present disclosure are set forth in the accompanying drawings and the description below. Other features and advantages of the present disclosure will be apparent from the description and drawings and from the claims.

### BRIEF DESCRIPTION OF THE DRAWINGS

Various embodiments in accordance with the present disclosure will be described with reference to the drawings, in which:
FIG. 1 illustrates an example environment that may execute implementations of the present disclosure.
FIG. 2 illustrates a block diagram representation of a high-level architecture of system implementing digital transformation and integration, in accordance with implementations of the present disclosure.
FIG. 3 illustrates block diagram representation depicting the generation of the business process hierarchy, in accordance with implementations of the present disclosure.
FIG. 4 illustrates a use case to generate coding artifacts and instructions based on user requirements, in accordance with implementations of the present disclosure.
FIG. 5 illustrates a block diagram representing the automatic harvesting of documents from the repository, extract relevant information, and generate artifacts, in accordance with implementations of the present disclosure.
FIG. 6 illustrates the flow diagram of an example method for implementing digital transformation and integration across technology delivery lifecycle (TDLC), in accordance with implementations of the present disclosure.
FIG. 7 illustrates an example computer system that may implement the system for implementing digital transformation and integration across a TDLC, in accordance with implementations of the present disclosure.

Like reference numbers and designations in the various drawings indicate like elements.

### DESCRIPTION

In the following description, various embodiments will be illustrated by way of example and not by way of limitation in the figures of the accompanying drawings. References to various embodiments in this disclosure are not necessarily to the same embodiment, and such references mean at least one. While specific implementations and other details are discussed, it is to be understood that this is done for illustrative purposes only. A person skilled in the relevant art will recognize that other components and configurations may be used without departing from the scope of the claimed subject matter.

Reference to any "example" (e.g., "for example", "an example of", by way of example" or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series and the like.

The use of a determiner such as "a" or "an" means "one or more" unless the context clearly indicates a single element.

Generic numeric labels such as "first," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B taken together), and when present with three or more stated possibilities means any individual possibility alone, all possibilities taken together, or some combination of possibilities that is less than all of the possibilities. The language in the format "at least one of A ... and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may be executed substantially concurrently or may sometimes be executed in the reverse order, depending upon the functionality/acts involved.

Specific details are provided in the following description to provide a thorough understanding of embodiments. However, it will be understood by one of ordinary skill in the art that embodiments may be practiced without these specific details. For example, systems may be shown in block diagrams so as not to obscure the embodiments in unnecessary detail. In other instances, well-known processes, structures, and techniques may be shown without unnecessary detail in order to avoid obscuring example embodiments.

The specification and drawings are to be regarded in an illustrative rather than a restrictive sense. It will, however, be evident that various modifications and changes may be made thereunto without departing from the broader spirit and scope of the invention as set forth in the claims.

To ensure a successful digital transformation, a deep understanding of the entity's processes is crucial. This includes identifying core activities of the entity, for example in a manufacturing entity, core activities include such as planning, execution, inventory management, and delivery. In the present disclosure, the proposed digital transformation solution can be tailored to align with these specific processes, optimizing operations and enhancing efficiency.

The digital transformation and integration across a technology delivery lifecycle (TDLC) includes a sequential, multi-step process. The multi-step process includes, generating a business process hierarchy identifying discrepancies (gap analysis) between current and desired business processes. Thereafter, functional and non-functional requirements, often documented as user stories, are determined. Thereafter, Design Documents are created, based on the requirements captured (for example, Functional Design, Technical Design, Config rationales and Business Process Design documents). Once the design documents are developed, relevant instructions are written that can enable these processes. Once the instructions are ready, test cases are created to verify the correctness of the solution followed by creating test cases to verify the correctness of the solution.

The traditional methodology for the implementation of above stated multi-step process of digital transformation presents significant technical challenges. Many of the steps, particularly generation business process hierarchy, gap analysis, and requirement specification, rely heavily on manual effort. Manual discovery and documentation of complex processes can be time-consuming, especially in large organizations. Furthermore, the traditional method requires significant human effort, domain expertise, and computational resources for analysis and modeling.

The traditional method generates a large volume of documentation, including business process models, requirements, design documents, and test cases. Managing and storing this data efficiently requires significant computational resources. Moreover, the process is iterative, requiring multiple revisions and updates to the documentation. This can lead to increased computational overhead, especially for large-scale projects. Creating realistic and diverse test data is challenging and time-consuming. Additionally, automating test cases reduces manual effort but requires significant upfront investment and technical expertise. Furthermore, the traditional methodology, for the successful implementation of digital transformation and integration, depends significantly on the domain experts involved. This can introduce variability and potential bottlenecks.

In essence, the complexity of traditional methods of digital transformations, particularly the manual effort involved in mapping and integrating disparate systems, can be a significant challenge. Developers are burdened with writing custom code for each integration, which can be a time-consuming and error-prone process.

To address the above states challenges, the disclosed method and system in the present disclosure offers a comprehensive, cloud-agnostic, platform-agnostic, and technology-agnostic solution for digital transformation. The present solution leverages the power of generative AI to significantly enhance speed, efficiency, productivity, and quality. The present solution can operate across various cloud providers and platforms. Additionally, the present solution supports integration with diverse technologies, ensuring seamless communication and data exchange.

Moreover, the disclosed method and system utilize 4E methodology to facilitate a comprehensive enterprise overhaul. The 4E methodology guides the fit-gap analysis of the business process hierarchy, ensuring a comprehensive understanding of the process needs and identifying areas for improvement. Further, the cloud-native architecture enables easy scaling of the solution to accommodate a growing entity's needs. Moreover, data-driven insights and predictive analytics support informed decision-making. The integration of generative artificial intelligence (gen AI) enables automated generation of business process hierarchy, requirements (user stories), and design documents. By automating routine tasks, generating intelligent code, and accelerating the overall process, the present solution empowers organizations to streamline their operations and drive innovation.

The integration of GenAI into core processes is a pivotal aspect in digital transformation and integration. This integration generates new streams of value, introducing innovative ways of working within the organizational landscape. As a result, GenAI can contribute to the optimization and innovation of the clients' digital solutions by facilitating rapid experimentation. The solution's capabilities extend beyond incremental improvements and may drive substantial enhancements in productivity, introducing novel value propositions, and identify multiple avenues for cost reduction.

Additionally, leveraging GenAI may significantly amplify delivery capabilities through the entire implementation of a TDLC, from initial deployment through ongoing operations. This strategic utilization provides clients with the tools they need to define and implement a robust digital core using digital technologies. By structuring the program teams and skills around advanced technologies and GenAI, the present innovation aims to expedite delivery processes, offering a pathway for organizations to stay at the forefront of technological innovation and effectively navigate today's fast-evolving digital landscape.

In essence through the implementation of present disclosure, organizations can significantly enhance the efficiency and effectiveness of their digital transformations. By automating the mapping and integration of systems, reducing manual effort, and improving code quality, organizations achieve faster time-to-market, lower costs, and higher quality outcomes.

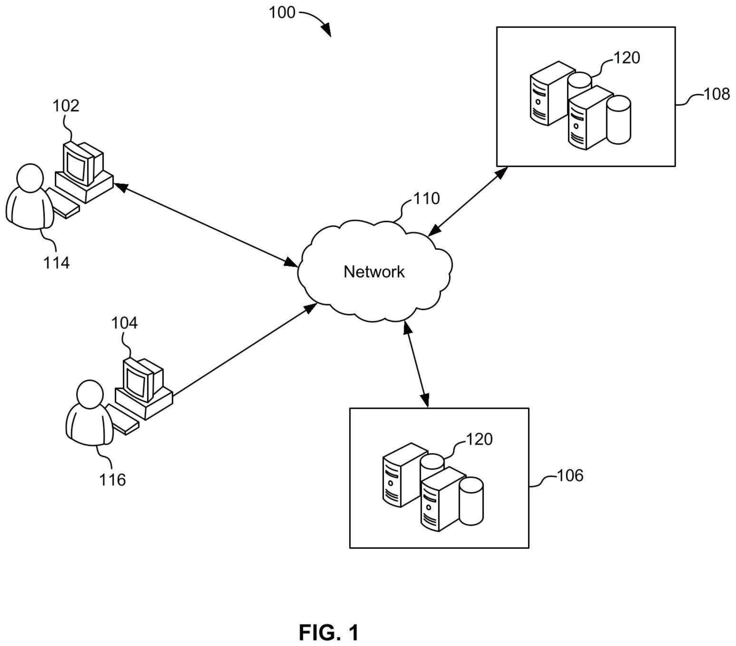

FIG. 1 depicts an example environment 100 that can be used to execute implementations of the present disclosure. In some examples, the example environment 100 enables users associated with respective systems to execute requests to generate content by invoking a trained language model in accordance with implementations of the present disclosure. The example environment 100 includes computing devices 102 and 104, back-end systems 106, and a network 110. In some examples, the computing devices 102 and 104 are used by respective users 114 and 116 to log into and interact with the platforms and run applications according to implementations of the present disclosure.

In the depicted example, the computing devices 102 and 104 are depicted as desktop computing devices. It is contemplated, however, that implementations of the present disclosure can be realized with any appropriate type of computing device (e.g., smartphone, tablet, laptop computer, voice-enabled devices). In some examples, the network 110 includes a local area network (LAN), wide area network (WAN), the Internet, or a combination thereof, and connects websites, user devices (e.g., computing devices 102, 104), and back-end systems (e.g., the back-end systems 106). In some examples, the network 110 can be accessed over a wired and/or a wireless communications link. For example, mobile computing devices, such as smartphones can utilize a cellular network to access the network 110.

In the depicted example, the back-end systems 106 each include at least one server system 120. In some examples, the at least one server system 120 hosts one or more computerimplemented services that users can interact with by using computing devices. For example, components of enterprise systems and applications can be hosted on one or more of the back-end systems 106. In some examples, the back-end system 106 can be provided as an on-premises system that is operated by an enterprise or a third-party taking part in cross-platform interactions and data management. In some examples, the back-end system 106 can be provided as an offpremises system (e.g., cloud or on-demand) that is operated by an enterprise or a third-party on behalf of an enterprise.

In some examples, the computing devices 102 and 104 each include computer-executable applications executed thereon. In some examples, the computing devices 102 and 104 each include a web browser application executed thereon, which can be used to display one or more web pages of platform running applications. In some examples, each of the computing devices 102 and 104 can display one or more graphical user interfaces (GUIs) that enable the respective users 114 and 116 to interact with the computing platform. In accordance with implementations of the present disclosure, the back-end systems 106 may host enterprise applications or systems that require data sharing and data privacy. In some examples, the computing device 102 and/or the computing device 104 can communicate with the back-end systems 106 over the network 110.

In some implementations, at least one of the back-end systems 106 can be implemented in a cloud environment. The back-end systems 106 include at least one server system (or server) 120. In the example of FIG. 1, the back-end system 106 can include various forms of servers including, but not limited to, a web server, an application server, a proxy server, a network server, and/or a server pool. In general, server systems accept requests for application services and provide such services to any number of client devices (for example, the computing device 102 over the network 110).

In some implementations, the back-end system 106 can implement an Artificial Intelligence (AI)-enabled platform trained to generate content relevant for individuals in accordance with contextual information. The AI-enabled platform can include a trained generative AI model that generates personalized content based on various queries. The generative AI model can be trained on a corpus of data.

Various examples depicting digital transformation and integration, are described in detail below.

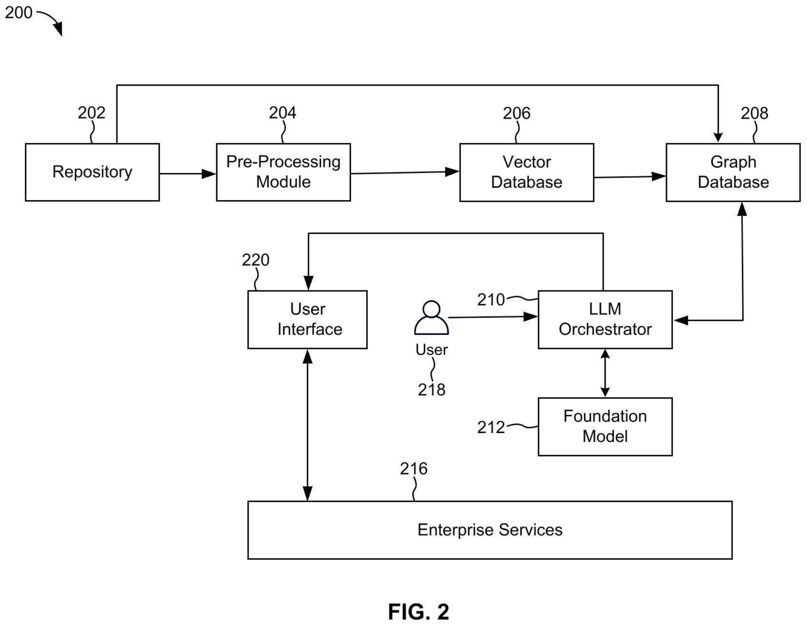

FIG. 2 illustrates a block diagram representation of a high-level architecture of system 200 implementing digital transformation and integration, in accordance with implementations of the present disclosure.

The system 200 may receive a collection of documents related to operations of a legal entity (e.g., a business, a university, a non-profit, etc.). The documents may be stored in a repository 202. The repository 202 may store a variety of input documents, including, but not limited to, word, excel, portable document format (PDF) and other formats. For example, the documents may represent the operational knowledge and procedures of the entity. For instance, the documents may include, but not limited to, information related to a legacy enterprise resource planning (ERP) system, client specific assets, general-purpose assets, and an organization's best practices. Herein, information related to a legacy ERP system may refer to predefined processes, data models, and configuration settings. Information related to client specific assets may refer to data including assets specific to a particular client or organization, such as custom processes, data structures, and integration points. Further, information of general-purpose assets may refer to predefined solutions and configurations to address common digital system scenarios.

Moreover, the documents received from the repository 202 may undergo pre-processing steps in a pre-processing module 204 such as, but not limited to, text extraction, cleaning, and normalization. The pre-processed documents may be converted into numerical representations (also known as embeddings) using techniques like BERT (Bidirectional Encoder Representations from Transformers). The document embeddings may be stored in a vector database 206 (for example, redis vector) for similarity search. Furthermore, a graph database 208 may generate a knowledge graph representing the relationships between entities and concepts within the documents embeddings stored in the vector database 206.

In further detail, the graph database 208 may include a searchable hierarchical vector search format including a vector structure associated with embeddings and a link structure linking child embeddings. The hierarchical vector search format may refer to a specific structure within the graph database 208 that leverages vector embeddings to enable efficient semantic search. For example, the graph database can implement various clustering techniques to structure the relationships, entities, and concepts. The child embeddings may be associated with content at a lower levels of logical groups representing a more specific concept. The child embeddings may represent more specific concepts within a particular logical group and may be linked to their parent embeddings, forming a hierarchical structure.

Additionally, the graph database 208 may include external documents cleaned (e.g., by the pre-processing module 204) to replace proprietary data with anonymous symbols. Each document may be cleaned to replace similar concepts with corresponding symbols to maintain an explicit relationship of a corresponding without the proprietary information. The pre-processing module 204 may ingest external documents, such as text documents, code, or other forms of structured or unstructured data. Proprietary data, including sensitive information like names, addresses, or specific product details, may be identified using various techniques such as regular expressions, machine learning (ML), or natural language processing (NLP). Thereafter, the identified proprietary data may be replaced with anonymous symbols or tokens, ensuring that the original data is masked to protect sensitive information. To maintain the underlying semantic structure of the document, similar concepts or entities may be replaced with consistent anonymous symbols. This may ensure that relationships between different parts of the document are preserved, even after anonymization. The anonymized documents may be then vectorized and stored in the vector database 206 followed by stored in the graph database 208, which is a specialized database designed to store and query interconnected data. The graph structure allows for efficient representation of relationships between entities and concepts within the documents.

Furthermore, a large language model (LLM) orchestrator 210 may generate a business process hierarchy based on the collection of documents, using a foundation model 212 and the graph database 208 of accumulated documents. A business process hierarchy may refer to a visual representation of a business process, broken down into smaller, more granular sub-processes and tasks. The business process hierarchy may illustrate the hierarchical structure of processes, starting from high-level, complex processes and gradually descending to detailed, low-level activities. Furthermore, the business process hierarchy may include a plurality of nodes representing different tasks or steps. The plurality of nodes may be organized into levels, with each level representing a different level of detail. Specifically, the plurality of nodes may be divided into different levels of logical groups and may include a plurality of nodes of each level of at least four levels. The business process hierarchy may help in understanding the flow of work, identifying dependencies, and optimizing process efficiency. In an example, the foundation model 212 may be a generative artificial intelligence (gen AI) model, providing the core language processing capabilities.

Furthermore, the generated business process hierarchy (e.g., by the LLM orchestrator 210) may be displayed on a user interface 220 (for example, a chat modal, etc). The user interface 220 may allow users 218 to supplement the business process hierarchy and provide feedback. Moreover, the user interface 220 may receive user 218 input to modify the business process hierarchy to modify or add at least one node of the business process hierarchy.

In further detail, the LLM orchestrator 210 may generate a plurality of documents corresponding to different document types for implementing each node of the business process hierarchy. The plurality of documents may include different modalities (for example text, video, audio, code, visuals, etc.). The LLM orchestrator 210 may leverage the capabilities of the graph database 208 and the foundation model 212 to generate the plurality of documents for each node, tailored to specific implementation needs. Non-limiting examples of the plurality of documents may include process flows, user manuals, technical specifications, test cases and code snippets. Herein, the process flows may refer to visual representations of the steps involved in a process. The user manuals may include instructions for users to interact with the system or application. The technical specifications may include detailed technical requirements for developers. The test cases may include scenarios to test the system's functionality. The code snippets may include instructions/code fragments or source code for implementing parts of the process.

Moreover, the LLM orchestrator 210 may classify the collection of documents into groups of similar documents. Each group of similar documents may be associated with a parent node in the business process hierarchy and identify a sequence of events associated a group of similar documents. Herein, the sequence of events may be mapped to a child node of a corresponding parent node.

Further, the LLM orchestrator 210 may analyze the specific node in the business process hierarchy, identify the required document type and desired output format. Furthermore, the LLM orchestrator 210 may construct a prompt, providing the foundation model 212 with relevant context, constraints, and desired output format. The foundation model 212 may process the prompt and generate the desired document. The foundation model 212 may access and leverage information from the knowledge graph (generated by graph database 208) to ensure accuracy and relevance.

Further, the generated plurality of documents may be formatted according to the specified modality. For example, a text-based document may be formatted as a word document, while code snippets might be formatted as a script or other code (e.g., a python script, a component in a framework such as React, etc.). Thereafter, the formatted documents may be published to downstream enterprise services 216 or assets.

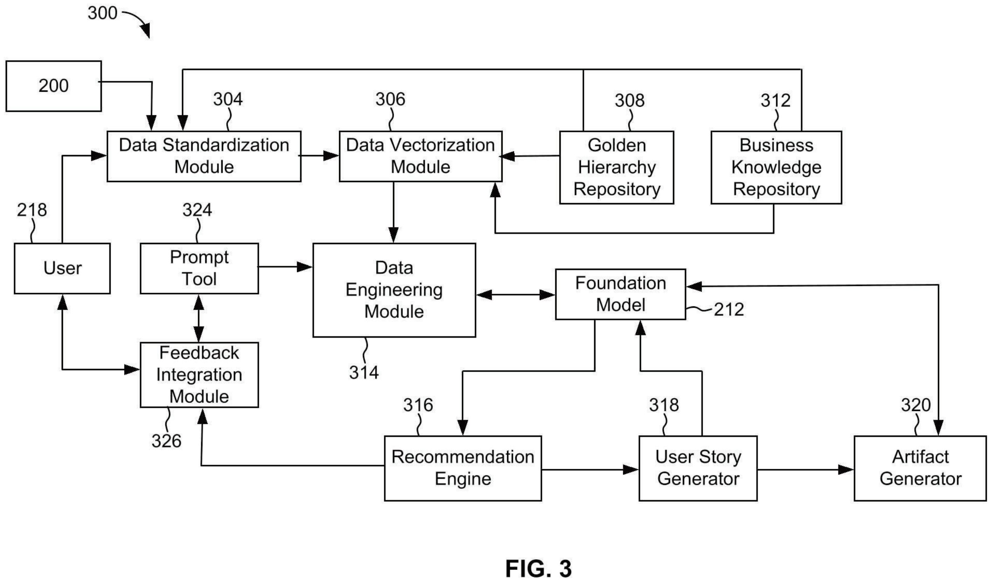

FIG. 3 illustrates a block diagram 300 depicting the generation of a business process hierarchy.

As part of the digital transformation, an entity may streamline operations by eliminating unnecessary processes and optimizing existing ones. Thus, a well-defined business process hierarchy may facilitate identifying redundant or inefficient processes and optimize workflows. Further, the business process hierarchy may identify valuable processes based on the collection of documents related to operations of the entity in the repository 202 (in Fig. 2) and align them with strategic goals.

The business process hierarchy may include the plurality of nodes divided into different levels of logical groups. The different levels of logical groups may include a first level (L1) corresponding a business area, a second level (L2) associated with a process group, a third level (L3) associated with a business process of the process group, a fourth level (L4) associated with a business process variant, a fifth level (L5) associated with a process step of the business process or business process variant, and a sixth level (L6) associated with an activity. The first level (L1) corresponding the business area may refer to the highest level, representing a broad functional area within the entity, for example finance, human resources (HR) or operations, etc. The second level (L2) associated with the process group may refer to a grouping of related processes within a domain area. For example, under finance, there might be process groups such as accounts payable, accounts receivable, and general ledger. The third level (L3) associated with business process of the process group may refer to a specific process within a process group. For example, under accounts payable, there may be processes like invoice processing, vendor payment, and invoice dispute resolution. The fourth level (L4) associated with the business process variant may refer to different variations or sub-processes within a main domain process. For example, the invoice processing process may have variants for domestic invoices and international invoices. The fifth level (L5) associated with the process step of the business process or business process variant may refer to individual steps or activities that make up a business process or a business process variant. For example, in the invoice processing process, steps might include invoice receipt, invoice verification, and invoice approval. The sixth level (L6) associated with the activity may refer to the most detailed level, representing specific actions or operations performed within the process step. For example, entering customer information, generating invoices, sending shipment notifications, etc.

The client teams or user 218 of the entity may input existing business process hierarchy, at any level of the logical group (L1, L2, L3, etc.). The input business process hierarchy may be incomplete or non-standard lacking detail or may adhere to inconsistent standards.

A data standardization module 304 may receive the existing business process hierarchy, which could be a user-defined business process hierarchy (from user 218), or the business process hierarchy generated by the system 200 itself. Further, the data standardization module 304 may apply a data validation protocol to ensure that the terminology used in the input business process hierarchy aligns with a predefined set of standard terms. The data validation protocol may refer to a set of rules or a knowledge base to standardize the terminology used in the input business process hierarchy. This may include identifying and replacing synonyms, abbreviations, or inconsistent terms with standardized equivalents. For instance, the data standardization module 304 may check the structure of the input business hierarchy to ensure it adheres to predefined standards, such as the number of levels, the types of nodes, and the relationships between nodes. Once the input business process hierarchy is standardized, the data standardization module 304 may compare the standardized business process hierarchy with a golden hierarchy, which serves as a reference standard. The golden hierarchy, stored in a golden hierarchy repository 308, is a well-defined, standardized hierarchy that represents best practices or industry standards. By comparing the input business process hierarchy with the golden hierarchy, the data standardization module 304 may identify any inconsistencies or deviations from the standard. Specifically, the data standardization module 304 may compare based on cosine similarity of descriptions. This assesses similarity in terms of vector orientation in multidimensional space, offering a nuanced approach to understanding hierarchical alignment. Other types of similarity comparison such as dot product may assess similarity.

Moreover, a data vectorization module 306 may receive the business process hierarchical data, from the data standardization module 304 and convert it into a format compatible with vector database 206. This adaptation may include structuring data to align with the schema and indexing requirements of vector-based search engines.

A business knowledge repository 312 may store and organize a collection of documents related to entity requirements. The collection of documents may be standardized (e.g., into a structured form) and anonymized. Additionally, the business knowledge repository 312 may include an extensive collection of business requirements, derived from diverse ERP implementations across multiple clients. Furthermore, a data engineering module 314 may identify, for each document in the collection of documents, a plurality of related documents based on a cosine similarity. Identifying the plurality of related documents may include searching the graph database 208 based on tokens associated with a document or a group of documents representing a similar concept in the collection of documents. In some cases, the search may exclude a subset of vectors based on a logical property. Furthermore, in response to identifying a relevant subset of vectors, the relevant subset of vectors based on the tokens may be searched, to identify the plurality of related documents.

In further detail, the data vectorization module 306 may segment document in the collection of documents into individual segments using a machine learning (ML) model. For example, the data vectorization module 306 may utilize ML models to split paragraphs into individual sentences, thereby ensuring that the subsequent analysis is performed at the sentence level, leading to precise results. Furthermore, each segment may be then converted into a numerical representation, referred to embedding (or vectors), using techniques like word embeddings or sentence embeddings. For example, various NLP tools include a segmenter to segmenting paragraphs into individual sentences, which cannot be done via logical rules. The vectors may capture the semantic and contextual information within the entity requirements. By leveraging a vectorized format, the business knowledge repository 312 may facilitate similarity search and semantic understanding. This means that when a new business requirement is introduced, the system can quickly identify similar requirements from the business knowledge repository 312, aiding in faster analysis, prioritization, and solution identification.

The data engineering module 314 may search for related documents in the graph database 208 (in FIG. 2) using the tokens from each document. For example, the data engineering module 314 may utilize the foundation model 212 (for example, all-mpnet-v3 sentence transformer model) for querying the vector database 206, enabling sophisticated text-based searches that compare client-specific data against a golden hierarchy. The foundation model 212 may utilize embeddings to measure cosine similarity between node descriptions, prioritizing textual context over mere nomenclature. In an example, the foundation model 212 may be a generative artificial intelligence (gen AI) model. Moreover, the data engineering module 314 may integrate gen AI techniques to automate the continual refinement of the business process hierarchy. The gen AI technique may include unsupervised learning techniques to detect patterns and anomalies in node placement and business process hierarchy structure. Additionally, the data engineering module 314 may deploy advanced NLP techniques to enhance text analysis capabilities. The advanced NLP techniques may include semantic parsing, entity recognition, and contextual analysis to better categorize and place nodes within the business process hierarchy. The data engineering module 314 may further utilize AI-driven tools, such as predictive analytics, to forecast potential disruptions or inefficiencies within the business processes hierarchy, thereby, facilitating proactive adjustments. Thereafter, the data engineering module 314 may identify related documents based on a cumulative cosine similarity of the tokens. Thereafter, the data engineering module 314 may extract features from the related documents based on the cosine similarity of content in the related documents. The features may be mapped to a node within the business process hierarchy. Additionally, a prompt tool 324 may construct a prompt, providing the data engineering module 314 with relevant context, constraints, and desired output format. The data engineering module 314 may process the prompt and generate the desired business process hierarchy.

Consequently, the data engineering module 314 may generate a complete business process hierarchy (L1 to L6) based on the incomplete business process hierarchy (from user 302), the golden hierarchy repository 308 and the business knowledge repository 312. Herein, the user 218 may review and suggest modifications to modify the automatically generated business process hierarchy. This collaborative approach ensures that the final generated business process hierarchy aligns with specific business needs and incorporates expert knowledge.

In further detail, a recommendation engine 316 may receive the generated business process hierarchy, from the data engineering module 314, as the input for the fit-gap analysis. The fit-gap analysis may include, identifying, by the recommendation engine 316, based on the collection of documents, one or more gaps associated with a first requirements specification associated with the at least one node of the business process hierarchy. The first requirements specification may refer to a set of predefined requirements or best practices, stored in the business knowledge repository 312. Additionally, the specified node in the business process hierarchy may represent a process or a set of processes designed to achieve a specific, repeatable outcome The recommendation engine 316 analyzes the collection of documents to identify specific requirements that are not adequately addressed in the generated business process hierarchy. For instance, the specific requirement may include information related to compliance, security, performance, or user experience, etc.

Moreover, the recommendation engine 316 may utilize a structured migration strategy delineated by the 4E (Elevate, Embrace, Enhance, Exclude) methodology. The 4E methodology may categorize the digital transformation actions to streamline decision-making and ensure alignment with strategic goals. Herein, embrace may refer to implementing a hybrid cloud setup using private cloud solutions with a public cloud mindset, utilizing best practices, configurations, and documentation to streamline transformation. Elevate may refer to leveraging an entity's assets to develop client-specific processes enabled by standard configurations, tailoring the ERP environment to meet specific organizational needs while maintaining a standard foundation. Enhance may refer to elevating both process delivery and configurations, incorporating developments required to bridge any gaps in standard technology, thereby enhancing system functionality and performance. Exclude may refer to defining scopes for regression testing only, without any modifications to processes or configurations, ensuring essential tests are conducted without altering the existing setup. Additionally, exclude may further include identifying processes that will not be included in the current release of the digital transformation program, thereby delineating the boundaries of the digital transformation scope. Each node at the logical level of the input business process hierarchy may be tagged according to one of the 4E categories by the recommendation engine 316. The tagging may facilitate tailored digital transformation actions aligned with specific operational requirements and strategic objectives.

Further, based on the identified gaps the recommendation engine 316 may provide a remedial action based on the at least one gap. The remedial action may include, but not limited to, excluding the business process, generating a sub-process to satisfy the at least one gap and requesting supervised input to satisfy the at least one gap. Specifically, the business process may be excluded when the business process cannot be implemented using an enterprise planning platform. Herein, the information associated with the business process may be excluded for corresponding nodes at a higher level and link to the business process. While the business process may be excluded, the associated information, such as requirements, documentation, or knowledge, can be preserved. The information may be linked to the higher-level nodes, providing context and historical reference. Moreover, the sub-process may be generated to satisfy the at least one gap when a best practice can satisfy the at least one gap without additional development. Moreover, if the gap requires a more granular level of detail or a specific workflow, the new sub-process may be generated. The sub-process may become a child node of the parent node where the gap was identified. For example, if the gap is identified in the "order processing" process, a new sub-process like "special order handling" may be created. Furthermore, when the recommendation engine 316 identifies the gap between the generated business process hierarchy and the desired business requirements, supervised input may be requested. Herein, human experts may provide specific guidance and corrections to deliver accurate and comprehensive business process hierarchies.

In essence, by proactively identifying and addressing gaps, the recommendation engine 316 may ensure that the generated business process hierarchy is accurate, comprehensive, and aligns with the organization's specific needs. Upon completion of the gap analysis by the recommendation engine 316, the requirements may be documented to initiate the transformation process.

Additionally, identifying the remedial action by the recommendation engine 316 may include generating a second requirements specification to fill the at least one gap. Specifically, based on the selections made in the gap analysis by the recommendation engine 316, a user story generator 318 may generate the second requirement specifications, also called user stories. The user stories may provide a concise and focused description of the desired functionality or feature. The user story generator 318 may analyze the identified gap and extract relevant information, such as the user role, the desired action, and the expected outcome. The user story generator 318 may format the user story according to a standardized template. For instance, the standardized template may be: "As a [user role], I want to [perform an action] so that [achieve a goal]". The user story generator 318 may define acceptance criteria, which are specific conditions that must be met to consider the user story complete.

Thereafter, the generated user story may be integrated with project management and development tools, for example Jira and DevOps. The user stories can be directly transferred from the user story generator 318 to the relevant project management tools, eliminating manual data entry and reducing errors. Integration with tools like DevOps may trigger automated workflows, such as building, testing, and deployment based on the generated user stories. Moreover, the generated user stories may be dynamically edited to assign appropriate story points and other relevant attributes. Changes made to user stories in the generation process may reflected in real-time in the integrated tools, ensuring consistency and avoiding discrepancies. The user story generator 318 may, via an automated mechanism, validate the accuracy of the generated user stories, ensuring they meet required standards and adhere to specified criteria. Upon validation of the generated user stories, the user stories may be published to the applications/tools designed to assess the quality of user stories. The applications may evaluate the user stories against the INVESTQ (independent, negotiable, valuable, estimable, small, testable and quality) principles, which are a set of criteria used to assess the quality of user stories. Herein the INVESTQ principles, the "independent" may ensure independence of user stories on each other. The principle "negotiable" may ensure that user stories should be open to negotiation and refinement. The principle "valuable" may ensure that the user story may deliver value to the end-user. The principle "estimable" may ensure that the user stories should be estimable in terms of effort and time. The principle "small" may ensure that the user stories are small enough to be completed in a short period. The principle "testable" may ensure that the user stories are testable to ensure quality. The principle "quality" may ensure that the user stories may specify any non-functional requirements, such as performance, security, or usability. By publishing user stories to the applications/tools, designed to assess the quality of user stories, the user stories may be automatically checked against the INVESTQ principles. If a user story fails to meet any of the criteria, the applications/tools may flag it for review and improvement, thereby, ensuring that only high-quality user stories are used to drive development efforts.

Furthermore, an artifact generator 320 may receive the generated user stories from the user story generator 318 to generate one or more artifacts. The artifacts may provide further details and guidance for development teams. The artifacts may include, but not limited to, design documents such as functional design documents (FDD), technical design documents (TDD), configuration rationale and business process design documents (BPDD). The FDD may outlines the system's functional requirements, including the specific features and functionalities that the system may provide. The TDD may outline details of the technical architecture, system components, and technologies to be used to implement the system. The configuration rationale may outline the rationale behind specific configuration choices made during the system implementation. The business process design documents may provide a detailed description of the business processes that may be supported by the system. Moreover, the artifact generator 320 may generate the design documents through a simple question-and-answer process, where users may provide essential information about the project, like, but not limited to, industry sector, specific business process, underlying technology stack, (for example, programming languages and frameworks), type of document to be generated (for example, FDD, TDD, BPDD), desired template for the document and legacy specifications. Based on this information, the design document may be generated automatically, incorporating relevant content and formatting. Further, users may review and modify the generated content in the design document as needed, ensuring accuracy and completeness. This automated approach significantly reduces the time and effort required to create high-quality design documents.

Additionally, a feedback integration module 326 may be provided to receive feedback from user 218 on the generated outputs, including user stories, artifacts, and recommendation. The insights gained from user 218 feedback may be used to refine the prompt generation by the prompt tool 324. Specifically, the feedback integration module 326 may modifying the prompts generated to elicit more accurate and relevant responses.

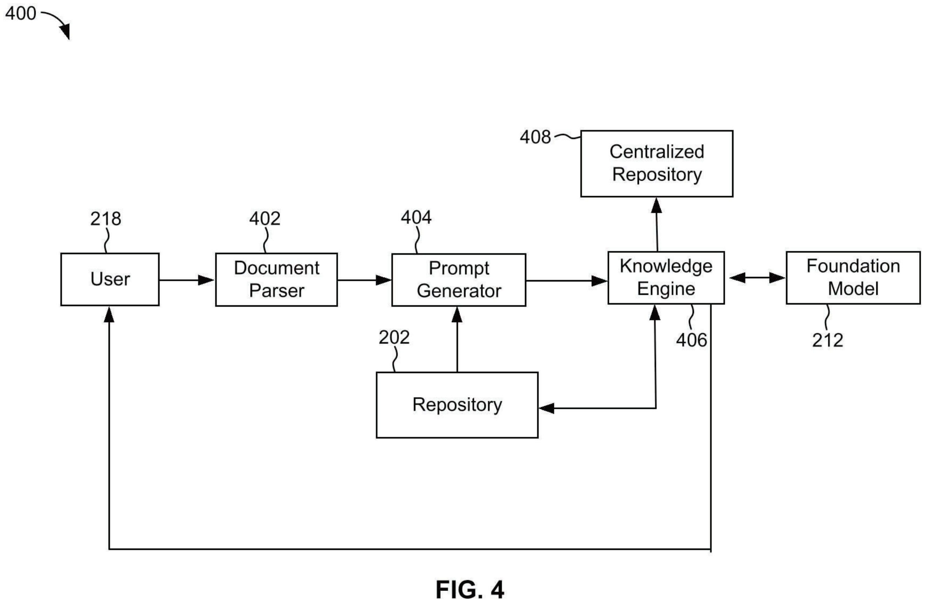

FIG. 4 illustrates a use case to generate coding artifacts/instructions based on user requirements (received from user 218). The user 218 may provide input in the form of functional requirements, technical design documents, or user stories. The input may be in various formats, such as text, diagrams, or spreadsheets, etc. The input documents from the user 218 may be received by a document parser 402. The document parser 402 may parse the document to capture a plurality of business processes identified in the business process hierarchy. Thereafter, a prompt generator 404 may generate prompts to generate instructions associated with the plurality of business processes identified in the business process hierarchy. The prompts may be generated based on the collection of documents and related content in the graph database 208 of accumulated documents. Further, a knowledge engine 406 may generate instructions to execute each of the plurality of business processes and user interface components to generate a user interface based on the instructions. The instructions and the user interface components may form an application corresponding to the business process hierarchy. The knowledge engine 406 may generate instructions by semantically analyzing available data in repository 202 or utilizing foundation model 212 capabilities.

In an instance, the knowledge engine 406 directly accesses the repository 202 to retrieve relevant instructions. For example, if the user requests instructions for an accounts payable report, the knowledge engine 406 may search the repository 202 for existing instructions that match the requirement and provides the instructions as a direct solution. Moreover, the knowledge engine 406 may combine information from the repository 202 with the capabilities of a foundation model. For example, when generating instructions for a vendor open line items report, the knowledge engine 406 may retrieve basic instructions and templates from the repository 202 and use the foundation model 212 to generate specific instructions, such as complex calculations or data manipulations. Thereafter, the knowledge engine 406 may combine the retrieved basic instructions from the repository 202 and specific instructions from the foundation model 212, to create a comprehensive and tailored instructions. In another instance, knowledge engine 406 may solely utilize the foundation model 212 to generate instructions. For example, when generating instructions for student records, which may be a less common scenario in the ERP context, the foundation model 212 may leverage its understanding of programming languages and data structures to generate the required instructions.

In further detail, the knowledge engine 406 may extract key sections from the documents stored in the repository 202 that are critical for downstream processes. The key sections may include but not limited to functional summary, functional requirement, in/out scope, functional design overview, detailed requirements, initiating/triggering process, detailed field mapping, custom tables, and selection screen (reports). Specifically, the functional summary may refer to concise overview of the document's purpose and scope. The functional requirements may refer to detailed specifications outlining the desired functionality and behavior of the system. The in/out scope may define the boundaries of the system or process, outlining the processes included and excluded. The functional design overview may refer to high-level design of the system, including its major components and their interaction. The detailed requirements may refer to in-depth specifications of the system's requirements, including data structures, algorithms, and user interfaces. The initiating/triggering process may refer to the events or conditions that trigger the execution of a specific process or function. The detailed field mapping may refer to the mapping between data fields in different systems or databases. The custom tables and selection screen (reports) may refer to specifications for custom tables and reports that need to be created.

In further detail, one or more test cases may be created based on the instructions to execute and validate the performance of the instructions and the user interface components. Herein, test data may be applied to the test cases to validate the performance of the instructions and the user interface components. The test data may mimic real-world scenarios and may include, but not limited to, valid input data, invalid input data, edge case data, and performance test data. The valid input data may refer to data that conforms to the system's input requirements. The invalid input data may refer to the data that violates the system's input constraints. The edge case data may refer to the data that tests the system's behavior at the limits of its capabilities. The performance test data may refer to the large volumes of data to assess the system's scalability and performance. Moreover, based on the instructions, test cases may be created that cover various scenarios, including, but not limited to, positive test cases, negative test cases, boundary value test cases, and performance test cases. The positive test cases may refer to test cases that verify the correct behavior of the system under normal conditions. The negative test cases may refer to test cases that test the system's ability to handle invalid or unexpected input. The boundary value test cases may refer to test cases that test the system's behavior at the boundaries of valid input ranges. The performance test cases may refer to test cases that evaluate the system's performance under heavy load.

The created test cases may be stored in a centralized repository 408. The centralized repository 408 may serve as a single source of truth for all test cases, ensuring consistency, accessibility, and efficient management. Moreover, the centralized repository 408 may track the execution status of each test case, providing visibility into test progress. Additionally, the test cases can be linked to defects, facilitating efficient defect tracking and resolution.

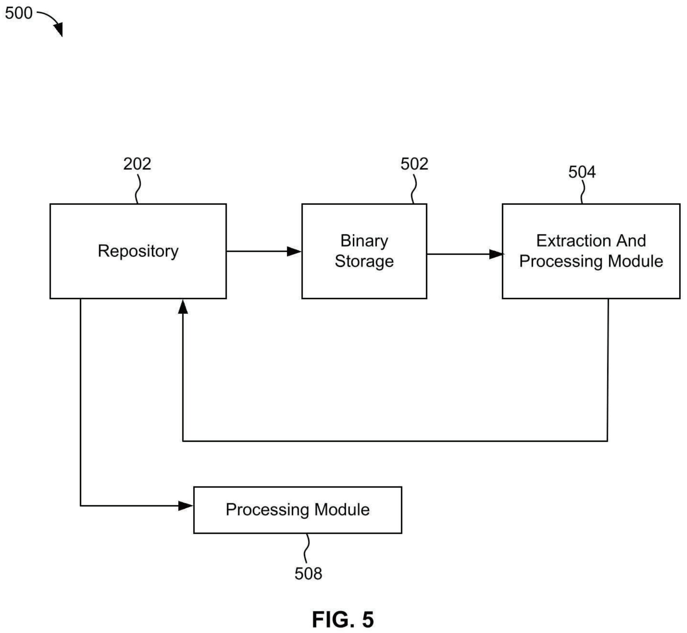

FIG. 5 illustrates a block diagram representing the automatic harvesting of documents from the repository 202 to extract relevant information and generate artifacts.

The repository 202 may be monitored for any new file uploads or changes. Any new file that is saved is also pushed into a binary storage 502 (for example BLOB storage). When a new file is detected, a trigger is initiated, triggering the subsequent actions by an extraction and processing module 504. Specifically, the extraction and processing module 504 may perform one or more tasks. The one or more tasks may include, but not limited to, extracting text from the document, extracting text from images within the document, extracting logos, and training a custom vision model. Furthermore, the extracted text and images may be processed to remove sensitive information, ensuring data privacy and security. The scrubbed documents may be sent to the repository 202 that can be shared for harvesting. Additionally, scrubbed documents may be sent for review through automated processes. Approved documents may be sent to a processing module 508, while rejected documents may be sent back for rework. In the processing module 508 the approved documents may be utilized to create a knowledge graph, representing the relationships between entities and concepts within the documents. The documents may also be stored in a vector database, which allows for efficient similarity search and retrieval.

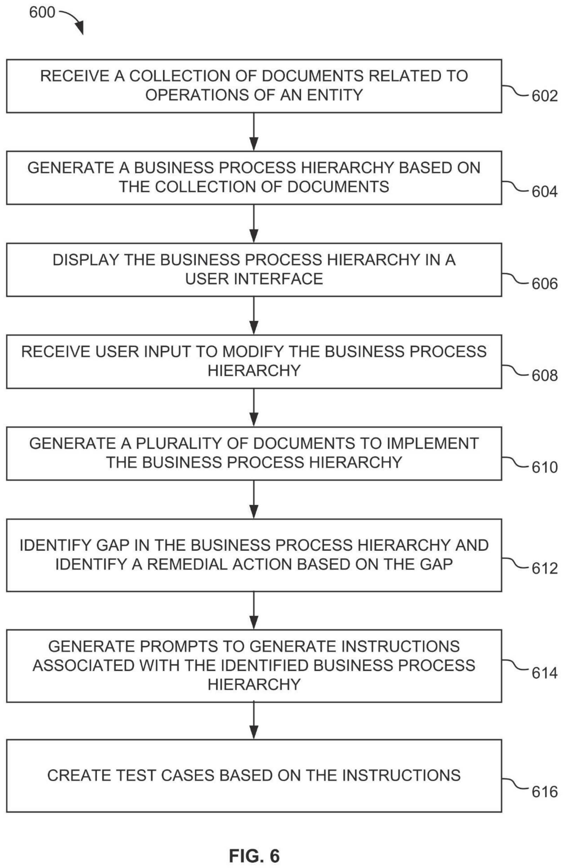

FIG. 6 illustrates the flow diagram of an example method 600 for implementing digital transformation and integration across TDLC, in accordance with implementations of the present disclosure. In some implementations, the method 600 may be described in conjunction with FIG. 2 and FIG. 3.

The method 600 may include receiving the collection of documents related to operations of the entity at block 602. Specifically, the pre-processing module 204 may receive the collection of documents related to operations of the entity from the repository 202.

The method 600 may include generating a business process hierarchy based on the collection of documents using the foundation model 212 and the graph database 208 at block 604. The nodes of the business process hierarchy may be divided into different levels of logical groups and include a plurality of nodes of each level of at least four levels.

The method 600 may include displaying 606 the business process hierarchy in a user interface 220. The user interface 220 may allow the user 218 to input supplement the business process hierarchy.

The method 600 may include receiving user input modifying the business process hierarchy to modify or add at least one node of the business process hierarchy at block 608. The modification may include changing the properties of an existing node, such as its name, description, or the processes it is linked to. Additionally, new nodes may be created and linked to existing nodes in the business process hierarchy, thereby extending the process flow.

The method 600 may include generating a plurality of documents corresponding to different document types for implementing each node of the business process hierarchy at block 610. Herein the plurality of documents may include different modalities. The modalities may include, but not limited to, textual documents, visual documents, code snippets and configuration files. The LLM orchestrator 210 may leverage the capabilities of the graph database 208 and the foundation model 212 to generate the plurality of documents for each node.

The method 600 may include identifying, based on the collection of documents, at least one gap associated with a first requirements specification associated with the at least one node of the business process hierarchy and identifying the remedial action based on the at least one gap at block 612. Specifically, the recommendation engine 316 may identify the gap in the business process hierarchy and provide the appropriate remedial action.

The method 600 may include generating, using a knowledge engine 406, prompts to generate instructions associated with a plurality of business processes identified in the business process hierarchy at block 616. Furthermore, the knowledge engine 406 may process the prompts and generate detailed instructions that align with the specific requirements of each business process.

The method 600 may include creating test cases based on the instructions to execute and validate performance of the instructions and the user interface components at block 616. Herein, the test data may be applied to the test cases to validate performance of the instructions and the user interface components. The created test cases may be stored in the centralized repository 408. The test cases stored in the centralized repository 408 may be reused across different test cycles, saving time and effort.

Implementations of the present disclosure provide technical solutions to multiple technical problems that arise in the context of digital transformation and integration across a TDLC.

In the generated complete business hierarchy, by the data engineering module 314, by leveraging only the node names, comprehensive requirement specifications/user stories may be generated that encapsulate entity requirements and client-specific contexts, thereby, ensuring that each story effectively communicates the necessary actions. Specifically, the data engineering module may utilize model-based testing (MBT) techniques to model business process hierarchy, from which test cases and scripts are automatically generated. This ensures comprehensive coverage across all test scenarios.

The recommendation engine 316 leverages the 4E methodology (Eliminate, Enhance, Execute, and Explore) to conduct a fit-gap analysis between the client's business process hierarchy and a standardized hierarchy. This analysis involves tagging nodes of the client's hierarchy with the appropriate 4E category. By aligning each node with a specific 4E action, the migration process becomes more streamlined and focused on strategic objectives.

Moreover, for the generation of user stories, the golden hierarchy repository 308 and business knowledge repository 312 may be implemented, that contains scrubbed and anonymized entity's requirements. These requirements may be transformed in vectorized formats by the data vectorization module 306, utilizing advanced embedding models. The golden hierarchy repository 308 and business knowledge repository 312 may be developed over various digital transformation implementations across different clients, providing a rich resource for accurately capturing and reflecting an entity's needs. The present disclosure may utilize data analytics and ML tools to parse and interpret the vast data stored in golden hierarchy repository 308 and business knowledge repository 312, thereby facilitating the quick identification relevant user stories and adapting them to new projects.

Moreover, by anonymizing sensitive data (in the pre-processing module 204), the privacy of individuals and organizations is protected. The anonymization process preserves the underlying semantic structure of the documents, enabling meaningful analysis and insights. Also, the graph database 208 allows for efficient querying and analysis of the anonymized data. By analyzing the relationships between concepts, new insights and knowledge can be discovered.

Furthermore, the knowledge engine 406 may automatically generate test scripts based on functional and technical specifications. Additionally, the test scripts are updated in real-time as changes occur in the development environment. The knowledge engine 406 may implement natural language processing (NLP) techniques to interpret functional specifications written in natural language to generate structured test scripts. Moreover, knowledge engine 406 may deploy ML algorithms to learn from past test cases and continuously improve the quality and effectiveness of generated test scripts.

In the present disclosure, the centralized repository 408 may store all generated test scripts/test cases, thereby facilitating reusability and standardization across different projects. The repository 202 may store templates for common test scenarios that can be quickly adapted to new projects, reducing the time required to generate new test scripts. Furthermore, the feedback integration module may incorporate feedback mechanisms to dynamically adjust test models based on actual test outcomes and changes in requirements.

The present disclosure implements a digital transformation and integration into a more efficient, accurate, and scalable system. The disclosed method and system reduces the time and effort required to prepare for and conduct testing and enhances the overall quality and reliability, thereby, ensuring that they meet the evolving needs of the entity. The present disclosure maintains competitive advantage and achieve operational excellence in digital transformation and integration across TDLC.

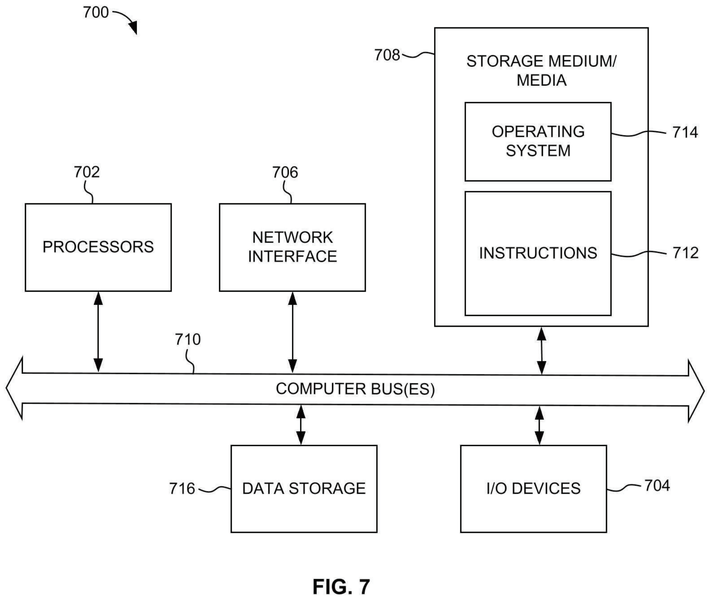

FIG. 7 illustrates a computer system 700 that may implement the system for digital transformation and integration. More particularly, computing machines such as desktops, laptops, smartphones, tablets, and wearables may implement the tasks that may have the structure of the computer system 700. The computer system 700 may include additional components not shown and some of the process components described may be removed and/or modified. In another example, a computer system 700 may be deployed on external cloud platforms such as cloud, internal corporate cloud computing clusters, organizational computing resources, and/or the like.

The computer system 700 includes processor(s) 702, such as a central processing unit, ASIC or another type of processing circuit, input/output devices 704, such as a display, mouse keyboard, etc., a network interface 706, such as a LAN, a wireless 802.11x LAN, a 3G or 4G mobile WAN or a WiMax WAN, and a computer-readable medium 708. Each of these components may be operatively coupled to a bus 710. The computer-readable medium 708 may be any suitable medium that participates in providing instructions to the processor(s) 702 for execution. For example, the computer-readable medium 708 may be non-transitory or non-volatile medium, such as a magnetic disk or solid-state non-volatile memory or volatile medium such as RAM. The instructions or modules stored on the computer-readable medium 708 may include machine-readable instructions 712 executed by the processor(s) 702 that cause the processor(s) 702 to perform the methods and functions of the system for digital transformation and integration.

The system may be implemented as software stored on a non-transitory processorreadable medium and executed by the processors 702. For example, the computer-readable medium 708 may store an operating system 714, such as MAC OS, MS WINDOWS, UNIX, or LINUX, and code for the system. The operating system 714 may be multi-user, multiprocessing, multitasking, multithreading, real-time, and the like. For example, during runtime, the operating system 714 is running and the code for the system is executed by the processor(s) 702.

The computer system 700 may include a data storage 716, which may include non-volatile data storage. The data storage 716 stores any data used or generated by the system.

The network interface 706 connects the computer system 700 to internal systems for example, via a LAN. Also, the network interface 706 may connect the computer system 700 to the Internet. For example, the computer system 700 may connect to web browsers and other external applications and systems via the network interface 706.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term computing system encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touchpad), by which the user may provide input to the computer. Other kinds of devices may provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a LAN and a WAN, e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A method comprising
receiving a collection of documents related to operations of an entity;
generating, using a model and a graph database of accumulated documents, a business process hierarchy based on the collection of documents, wherein nodes of the business process hierarchy is divided into different levels of logical groups and includes a plurality of nodes of each level of at least four levels;
displaying the business process hierarchy in a user interface, wherein the user interface allows input to supplement the business process hierarchy;
receiving user input modifying the business process hierarchy to modify or add at least one node of the business process hierarchy; and
generating a plurality of documents corresponding to different document types for implementing each node of the business process hierarchy, wherein the plurality of documents include different modalities.

2. The method of claim 1, wherein the levels of the logical groups include a first level corresponding a business area, a second level associated with a process group, a third level associated with business process of the process group, a fourth level associated with a business process variant, a fifth level associated with a process step of the business process or business process variant, and a sixth level associated with an activity.

3. The method of claim 1 or 2, wherein generating the business process hierarchy comprises identifying, for each document in the collection of documents, a plurality of related documents based on a cosine similarity.

4. The method of any one of the preceding claims, wherein identifying the plurality of related documents comprises:
tokenizing natural language of each document in the collection of documents into tokens; and
searching for related materials in the graph database using the tokens from each document; and
identifying related documents based on a cumulative cosine similarity of the tokens.

5. The method of any one of the preceding claims, further comprising:
extracting features from the related documents based on the cosine similarity of content in the related documents, wherein the features are mapped to a node within the business process hierarchy;
and/or
wherein tokenizing the natural language comprises splitting paragraphs into individual sentences using a machine learning model.

6. The method of any one of the preceding claims, wherein the graph database comprises a searchable hierarchical vector search format including a vector structure associated with embeddings and a link structure linking child embeddings, and
wherein the child embeddings are associated with content at a lower levels of logical groups representing a more specific concept.

7. The method of any one of the preceding claims, wherein the identifying, for each document in the collection of documents, the plurality of related documents comprises:
searching the graph database based on tokens associated with a document or a group of documents representing a similar concept in the collection of documents, wherein the search excludes a subset of vectors based on a logical property; and
in response to identifying a relevant subset of vectors, searching the relevant subset of vectors based on the tokens to identify the plurality of related documents.

8. The method of any one of the preceding claims, wherein generating the business process hierarchy based on the collection of documents, comprises:
identifying, based on the collection of documents, at least one gap associated with a first requirements specification associated with the at least one node of the business process hierarchy; and
identifying a remedial action based on the at least one gap.

9. The method of any one of the preceding claims, wherein the at least one node comprises a business process for executing one or more processes to achieve a repeatable result, and wherein the remedial action comprises at least one of:
excluding the business process when the business process cannot be implemented using an enterprise planning platform, wherein the information associated with the business process is excluded for corresponding nodes at a higher level and link to the business process;
generating a sub-process to satisfy the at least one gap when a best practice can satisfy the at least one gap without additional development; and
requesting supervised input to satisfy the at least one gap;
and/or
wherein identifying the remedial action comprises:
generating a second requirements specification to fill the at least one gap.

10. The method of any one of the preceding claims, further comprising:
generating, using a knowledge engine, prompts to generate instructions associated with a plurality of business processes identified in the business process hierarchy; and
receiving, from a generative response engine based on the prompts, instructions to execute each of the plurality of business processes and user interface components to generate a user interface based on the instructions, wherein the instructions and the user interface components form an application corresponding to the business process hierarchy.

11. The method of any one of the preceding claims, wherein the prompts are generated based on the collection of documents and related content in the graph database of accumulated documents;
and/or
wherein the method further comprises:
creating test cases based on the instructions to execute and validate performance of the instructions and the user interface components, wherein test data is applied to the test cases to validate performance of the instructions and the user interface components.

12. The method of any one of the preceding claims, further comprising:
classifying the collection of documents into groups of similar documents, wherein each group of similar documents is associated with a parent node in the business process hierarchy; and
identifying a sequence of events associated a group of similar documents, wherein the sequence of events are mapped to a child node of a corresponding parent node;
and/or
wherein the graph database of accumulated documents includes external documents cleaned to replace proprietary data with anonymous symbols, wherein each document is cleaned to replace similar concepts with corresponding symbols to maintain an explicit relationship of a corresponding without the proprietary data.

13. A system, comprising:
at least one memory configured to store audio data, the audio data including a sequence of audio frames; and
at least one processor coupled to the at least one memory and configured to:
receive a collection of documents related to operations of an entity;
generate, using a model and a graph database of accumulated documents, a business process hierarchy based on the collection of documents, wherein nodes of the business process hierarchy is divided into different levels of logical groups and includes a plurality of nodes of each level of at least four levels;
display the business process hierarchy in a user interface, wherein the user interface allows input to supplement the business process hierarchy;
receive user input modifying the business process hierarchy to modify or add at least one node of the business process hierarchy; and
generate a plurality of documents corresponding to different document types for implementing each node of the business process hierarchy, wherein the plurality of documents include different modalities.

14. The system of claim 13, further comprising:
a multiply accumulate unit configured to search a database having hierarchical vector search format including a vector structure associated with embeddings and a link structure linking child embeddings, and
wherein the child embeddings are associated with content at a lower levels of logical groups representing a more specific concept.

15. The system of claim 13 or 14, wherein the multiply accumulate unit is configured to:
search the graph database based on tokens associated with a document or a group of documents representing a similar concept in the collection of documents, wherein the search excludes a subset of vectors based on a logical property; and
in response to identifying a relevant subset of vectors, search the relevant subset of vectors based on the tokens to identify the plurality of related documents;
and/or
wherein the graph database of accumulated documents includes external documents cleaned to replace proprietary data with anonymous symbols, wherein each document is cleaned to replace similar concepts with corresponding symbols to maintain an explicit relationship of a corresponding without the proprietary information.
